(19) **Europäisches Patentamt**
**European Patent Office**
**Office européen des brevets**

(11) **EP 4 718 244 A1**

(12) **EUROPEAN PATENT APPLICATION**

(43) Date of publication:
01.04.2026 Bulletin 2026/14

(21) Application number: 25203559.7

(22) Date of filing: 22.09.2025

(51) International Patent Classification (IPC):
*G06F 9/38* (2018.01)

(52) Cooperative Patent Classification (CPC):
G06F 9/3836; G06F 9/3853; G06F 9/3885;
G06F 9/3887

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 27.09.2024 GB 202414194

(71) Applicant: **Nokia Solutions and Networks Oy**
**02610 Espoo (FI)**

(72) Inventors:
• **BORGHS, Eric**
 **Geel (BE)**
• **JIVANESCU, Mihaela Andreea**
 **Antwerp (BE)**

(74) Representative: **Nokia EPO representatives**
**Nokia Technologies Oy**
**Karakaari 7**
**02610 Espoo (FI)**

(54) **PROCESSOR ARCHITECTURE FOR PROCESSING MULTIPLE INSTRUCTIONS IN PARALLEL**

(57) A processor comprising: a program memory for storing instructions; a decoder adapted to convert the instructions into respective operation codes and enable signals; a controller including an instruction word consisting of a plurality of instruction slots for providing the instructions to the decoder; a plurality of processing elements, each processing element being configured to operate during a time slot in accordance with an operation code provided to an input of the considered processing element so as to apply a mathematical operation to an input data element and generate an output data element, wherein an instruction provided via an instruction slot identifies one or more target processing elements to be used for executing the considered instruction, wherein the enable signals are adapted to control assignment of the operation codes to the processing elements; interconnection circuitry adapted to provide any of the operation codes to any of the processing elements at each time slot and configured to be operated in accordance with the enable signals.

FIG. 1

**Description**

TECHNICAL FIELD

Various example embodiments relate generally to a processor and processor architecture adapted for processing multiple instructions in parallel.

BACKGROUND

Various types of processor architecture may be used, including SIMD (Single Instruction, Multiple Data), SISD (Single Instruction, Single Data), MIMD (Multiple Instruction, Multiple Data) and MISD (Multiple Instruction, Single Data). Each of these types of processor architecture includes processing elements to which instructions may be assigned according a given set of rules.

In SISD, a scalar processing element operates on a data element at each time slot in accordance with an instruction from a given instruction slot such that the scalar processing element is configured to process over time a single stream of data elements in accordance with a single stream of instructions.

In SIMD, a vector processing element operates on multiple data elements at each time slot in accordance with an instruction from a given instruction slot such that the vector processing element is configured to process over time multiple streams of data elements in accordance with a single stream of instructions.

In MISD, compared to SISD, multiple instruction slots work in parallel to provide multiple instructions at each time slot and each scalar processing element is assigned to a given instruction slot, such that the processor is able to process multiple instruction streams in parallel where each scalar processing element is configured to process one single stream of instructions from a given instruction slot.

In MIMD, compared to SIMD, multiple instruction slots work in parallel to provide multiple instructions at each time slot and each vector processing element is assigned to a given instruction slot, such that the processor is able to process multiple instruction streams in parallel where each vector processing element is configured to process one single stream of instructions from a given instruction slot.

A MIMD architecture could be very powerful and efficient for some use cases, but in many other use cases is cause of dark silicon, i.e., some processing elements may not be used in the absence of instruction assigned to them. As an example, in case of matrix operations, the rate of dark silicon may be above 90% of the total number of processing elements for a MIMD architecture. This renders the processor inefficient and therefore also too costly compared to its use.

The design of the processor may be optimized for target use cases, for example to provide thousands of multipliers in a processor design and multiple instruction slots. But it may be difficult to efficiently design and dimension the processor for all targeted use cases. And when covering different use cases of different dimensions, it would increase the area of dark silicon and the time it is kept dark.

SUMMARY

The scope of protection is set out by the appended claims. The embodiments, examples and features, if any, described in this specification that do not fall under the scope of protection of the independent claims are to be interpreted as examples useful for understanding the various embodiments or examples that fall under the scope of protection.

According to a first aspect, a processor comprises: a program memory for storing instructions; a decoder adapted to convert the instructions into respective operation codes and enable signals; a controller including an instruction word consisting of a plurality of instruction slots for providing the instructions to the decoder; a plurality of processing elements, each processing element being configured to operate during a time slot in accordance with an operation code provided to an input of the considered processing element so as to apply a mathematical operation to an input data element and generate an output data element, wherein an instruction provided via an instruction slot identifies one or more target processing elements to be used for executing the considered instruction, wherein the enable signals are adapted to control assignment of the operation codes to the processing elements; interconnection circuitry adapted to provide any of the operation codes to any of the processing elements at each time slot and configured to be operated in accordance with the enable signals.

The processor may operate in accordance with a Very Long Instruction Word operation mode. The instruction word may be a Very Long Instruction Word.

The interconnection circuitry may be adapted to provide a given operation code to any number of processing elements at each time slot.

The processor may comprise a stitch control circuitry and at least one hardware stitch, wherein each of the at least one hardware stitch is configured to connect or respectively disconnect at least two processing elements, wherein the stitch control circuitry is adapted for opening or closing the at least one stitch in accordance with the stitching signals generated from instructions allocated to the at least two processing elements.

The interconnection circuitry may include a multiplexer adapted to provide operation codes to the processing elements in accordance with the enable signals.

The plurality of processing elements may be scalar processing elements.

The plurality of processing elements may include one or more scalar processing elements.

The plurality of processing elements may include one or more vector processing elements. The vector processing elements may have different lengths.

In one or more embodiments, at least one first of the plurality of processing elements may support at least one first type of mathematical operation and at least one second of the processing elements may support at least one second type of mathematical operation, where the first type of mathematical operation is distinct from the second type of mathematical operation.

In one or more embodiments, at least one third of the plurality of processing elements supports at least one first data type and at least one fourth of the processing elements supports at least one second data type, where the first data type is distinct from the second data type.

According to a second aspect, a compiler is configured to compile a program code to generate instructions to be processed by a processor according to any of the preceding claims, wherein the compiler is configured to allocate the instructions to respective processing elements and instruction slots of the processor, wherein each instruction identifies one or more target processing elements to be used for executing the considered instruction, wherein the compiler is adapted to allocate any of the instructions to any of the processing elements at each time slot.

The compiler may be adapted to allocate any of the instructions to any number of processing elements at each time slot.

The compiler may be configured to ensure that no processing element is allocated to two or more instructions in the same time slot by checking possible conflicts with other instructions to be allocated in the same time to the same processing element.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 shows an architecture of a processor according to an example.
FIG. 2 shows an interconnection circuitry adapted for a processor according to an example.
FIG. 3 illustrates assignment of instructions to processing elements according to an example use case #1.
FIG. 4 illustrates assignment of instructions to processing elements according to an example use case #2.
FIG. 5 illustrates assignment of instructions to processing elements according to an example use case #3.
FIG. 6 illustrates assignment of instructions to processing elements according to an example use case #4.
FIG. 7 illustrates assignment of instructions to processing elements according to an example use case #5.
FIG. 8 illustrates assignment of instructions to processing elements according to an example use case #6.

It should be noted that these drawings are intended to illustrate various aspects of devices, methods and structures used in example embodiments described herein. The use of similar or identical reference numbers in the various drawings is intended to indicate the presence of a similar or identical element or feature.

DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

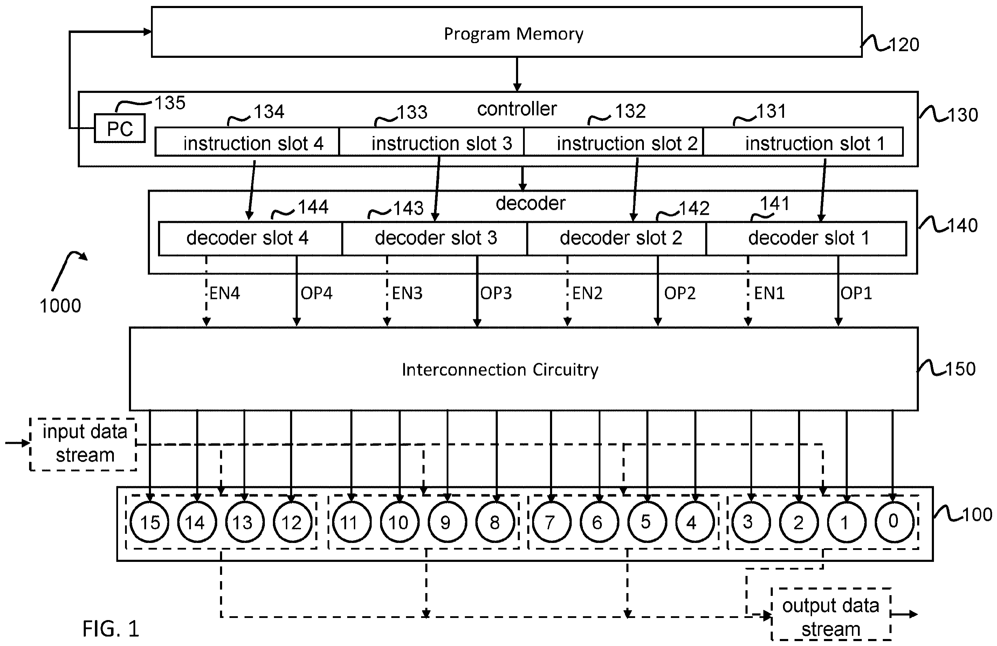

Principles of embodiments of an architecture of a processor are illustrated schematically by FIG. 1. This architecture may be used in various types of computers.

A processor 1000 includes a plurality of processing elements (PEs) #0 to #15. The plurality of PEs #0 to #15 may correspond to a vector lane 100.

The processor 1000 further includes a program memory 120 configured for storing instructions to be executed by the plurality of PEs #0 to #15.

Each of the PE #0 to #15 is configured to operate, during a time slot, in accordance with an operation code (or opcode) provided to the considered PE so as to apply a mathematical operation to an input data element from an input data stream and generate an output data element of an output data stream. A time slot may correspond for example to a clock cycle of a clock of the processor.

The addresses of input data and output data may be defined in registers, e.g., in a register file.

The mathematical operation performed by a PE #0 to #15 may be any type of basic operation like, for example, a multiplication, an addition, a division, a trigonometric operation, a shift, a logical operation (e.g., a XOR, AND, OR, NOR, etc), or a combination thereof.

Each of the PE #0 to #15 may be configured (and optimized) to apply only one or some of the above types of mathematical operation. A PE may be configured to operate on one or more specific data types: integer values of various lengths, floating point values of various lengths, binary values, etc. A PE may be configured (e.g., optimized) to operate only on a specific data type.

In computing, an opcode (abbreviated from operation code, also known as instruction machine code or instruction code) is the portion of a machine language instruction that specifies the operation to be performed.

The processor may include a decoder 140 and a controller 130. The controller 130 includes a plurality of instruction slots 131 to 134 for providing, at each time slot, respective instructions to the decoder 140.

A fetch unit (e.g., a program counter) 135 in the controller may be configured to fetch instructions from the program memory 120 and to provide the instructions to the decoder 140 through the set of instruction slots 131 to 134.

The instruction slots 131 to 134 allow parallel processing of the instructions provided by these instruction slots. Each of the instruction slots 131 to 134 may be configured to provide a respective instruction to the decoder 140. One instruction is provided per instruction slot per time slot (i.e., per clock cycle) The set of instructions slots 131 to 134 may form an instruction word (e.g., a Very Long Instruction Word, VLIW).

In the simplified illustration of FIG. 1, a pool of 16 PEs and 4 instruction slots is shown, but the principles disclosed herein are applicable to any number of PEs and any number of instruction slots.

The decoder 140 is configured to convert the fetched instructions into respective operation codes and enable signals, wherein the enable signals are configured to control assignment of the operation codes to the PEs.

The decoder 140 may be adapted to convert the instructions into respective operation codes OP1, OP2, OP3, OP4 and enable signals EN1, EN2, EN3, EN4. Each instruction provided by an instruction slot 131 to 134 may be converted to one operation code and one or more enable signals. In embodiments, each instruction provided by an instruction slot 131 to 134 may be converted to one or more operation codes and one or more enable signals.

At each time slot, each of the PEs #0 to #15 can be flexibly allocated to any of the instruction slots 131 to 134 so as to receive the corresponding operation code decoded from the corresponding instruction. The PEs #0 to #15 are thus fully decoupled from the instruction slots 131 to 134. There is no fixed allocation of the PEs #0 to #15 to the different instruction slots 131 to 134 like in typical MIMD processors.

As a result of this flexible allocation, a single PE can be allocated at any single point in time to only one single instruction slot #1 but can, over time, be allocated to any of the instruction slots, being the same or distinct from the instruction slot #1. As an example, exactly the same PE can be used at time slot *t1* by an instruction in the instruction slot #1, while that very same PE can be used at time slot *t2* by an instruction in the instruction slot #2.

Also, a given instruction slot can be allocated to any PE and to any number of PEs.

Each of these flexibly allocatable PEs is referred to herein as "atomic PE" or "VALUTA", for "Vector Arithmetic Logic Unit Transaction Atomic". A VALUTA corresponds to the smallest level or granularity at which PEs are available and at which the processor may be programmed. The proposed architecture is referred to as the VALUTA architecture.

To handle the allocation in a flexible manner, an interconnection circuitry 150 is provided between the decoder and the plurality of PEs. The operation code and enable signal decoded from a given instruction fetched via an instruction slot 131 to 134 are provided by the decoder (e.g. by a respective decoder slot 141 to 144) to the interconnection circuitry 150.

The interconnection circuitry 150 is adapted to provide, at each time slot, any of the operation codes OP1, OP2, OP3, OP4 converted from an instruction from an instruction slot to any of the PEs #0 to #15. The interconnection circuitry 150 is configured to be operated in accordance with the enable signals EN1, EN2, EN3, EN4 generated by the decoder 140.

The enable signals may for example be binary signals that control operation of the interconnection circuitry 150. An enable signal may be a signal controlling one or more target PE.

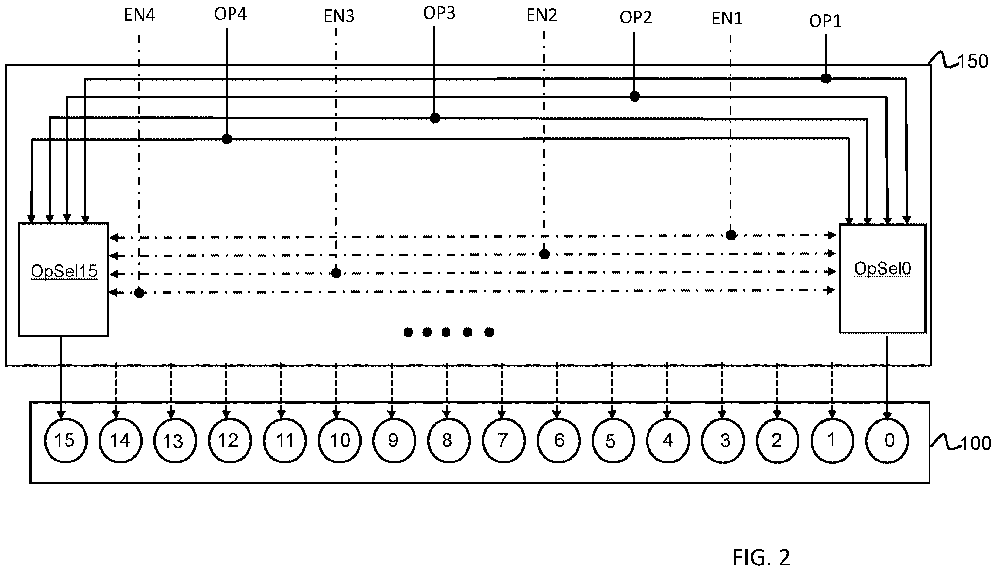

As represented by FIG. 2, the interconnection circuitry 150 may for example include a multiplexer adapted to provide operation codes OP1, OP2, OP3, OP4 to the PEs in accordance with the enable signals EN1, EN2, EN3, EN4. Any other type of circuitry adapted to receive a plurality of operation codes, a plurality of enable signals and to control feeding of the operation codes to a plurality of PEs in accordance with the enable signals may be used.

As represented by FIG. 2, the interconnection circuitry 150 may include, for each of the PEs #0 to #15, respective operation selection circuitry OpSel0 to OpSel15, where each operation selection circuitry is adapted for selecting the operation code assigned to the associated PE and for providing the selected operation code to the associated PE on the basis of one or more of the enable signals EN1, EN2, EN3, EN4.

This processor architecture can handle various use cases in a more efficient manner by using a pool of PEs (PEs) while reducing dark silicon.

Each PEs may be a scalar PE or a vector PE. Any combination of scalar PEs and vector PEs may be used as necessary. This provides additional design possibility and flexible assignment possibilities adapted to various use cases.

Likewise, the vector PEs, if any, may be of the same length or may have different lengths to be able to process different number of scalar data input streams. This provides additional design possibility and flexible assignment possibilities adapted to various use cases.

The processor may include a combination of scalar PEs of different types. For example, one or more of the PEs may support a first type of mathematical operation and one or more of the PEs may support a second type of mathematical operation, where the first type of mathematical operation is distinct from the second type of mathematical operation. For example, one or more of the PEs may support a first data type and one or more of the PEs may support at least one second data type, where the first data type is distinct from the second data type.

This decoupling of PEs from instruction slots allows aggregation of atomic PEs in a fully flexible way. The aggregated atomic PEs may be scalar PEs or vector PEs or any combination of scalar PEs and vector PEs. By aggregating scalar PEs, vector PEs or matrix PEs may be created as needed. This aggregation corresponds to a stitching at software level or at logical level of the input data elements of the PEs and may be controlled by the allocation of instructions slots (or equivalently instructions) to PEs.

The stitching at software level may for example be an aggregation in a vector or a matrix of output data elements produced by respective scalar PEs.

For example, several scalar PEs may be aggregated to be controlled at the same time slot by a same instruction from a given instruction slot such that the aggregated scalar PEs effectively behave as a SIMD architecture. But at the other extreme, each scalar PE may be controlled by a respective instruction from an instruction slot such that the scalar PEs are controlled by instructions from respective parallel instruction slots, effectively behaving like a MISD or like a MIMD if several scalar PEs are aggregated to be controlled by a same instruction from an instruction slot.

In embodiments, there may be one or more hardware stitches used to stitch PEs at hardware level (e.g., the hardware stitches including hardware wiring or connections), wherein each of stitches is configured to connect or respectively disconnect two PEs so as to perform a hardware stitching on the connected PEs. Each of hardware stitches is configured to be open or closed under control of a stitch control circuitry. In embodiments, the stitch control circuitry may be part of the interconnection circuitry 150 or be a distinct circuitry. The stitch control circuitry may be configured to control opening or closing of the hardware stitches in accordance with stitching signals. The stitching signals for stitching PEs may be generated by the stitch control circuitry in accordance with corresponding instructions provided for the considered PEs.

The stitching (whether at software level or hardware level) may be performed before or after the execution of the operations by the PEs: a stitching may be applied either to input data elements of PEs or to output data elements of PEs. A stitching on input data elements may be used in combination with a stitching on output data elements.

The stitching function to be performed by stitching (whether at software level or hardware level) may be identified by the instruction allocated to the considered PEs. For example, the instruction includes information (e.g., instruction bits) that identifies the type of stitching function (e.g. Hadamard product, dot-product, etc) to be performed. This information may be used to generate the stitching signals used to control the hardware stitches if any.

Stitching at software level and stitching at hardware level may be used in combination.

This provides an increased flexibility, i.e., the ability to move between the two extremes in a user defined granular way, rendering the wall between instruction slots and the PEs fluid, as opposed to the rigid allocations used in typical SIMD/MIMD architectures.

The programmer may learn about the possibilities of the proposed architecture in order to efficiently make use of the new possibilities. This is not different from programming a GPU, DSP or CPU with vector unit.

The proposed allocation mechanism may be performed within a single hardware thread and allows within a single thread, a more efficient use of one or more sets of PEs. The proposed allocation mechanism avoids complex logic and architecture associated with multiple hardware threads and provides enhanced flexibility with less silicon overhead, no multi-threading performance loss. It avoids the extra programming complexity of a multi-threaded solution. The proposed architecture allows to efficiently use wide vector widths (e.g., SIMD vector lanes of a VLIW processor).

Parallelism and/or hardware multithreading may be added on top of the proposed allocation mechanism by providing several sets of PEs that are each controlled in parallel according to the principle disclosed herein. In such a case, sets of PEs may be controlled by respective sets of instruction slots.

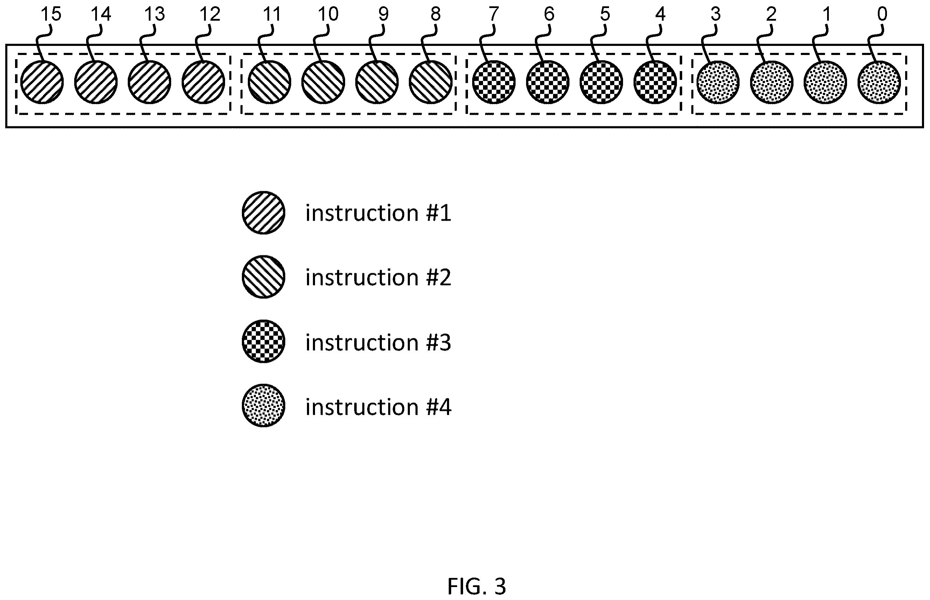

The flexible allocation mechanism is illustrated by the use cases of FIGS. 3 to 7.

In these examples, each instruction is provided by a respective instruction slot. Each of the instructions (or equivalently, each of the instruction slots) is assigned to one or more PEs.

A specific instruction "nop" instructing a PE to do nothing may be used when no operation is to be executed by the PE during a given instruction slot.

FIG. 3 illustrates assignment of instructions to PEs at a given time slot according to an example use case #1. In this example:

- instruction #1 is assigned to PEs #12-#15;
- instruction #2 is assigned to PEs #8-#11;
- instruction #3 is assigned to PEs #4-#7;
- instruction #4 is assigned to PEs #0-#3;

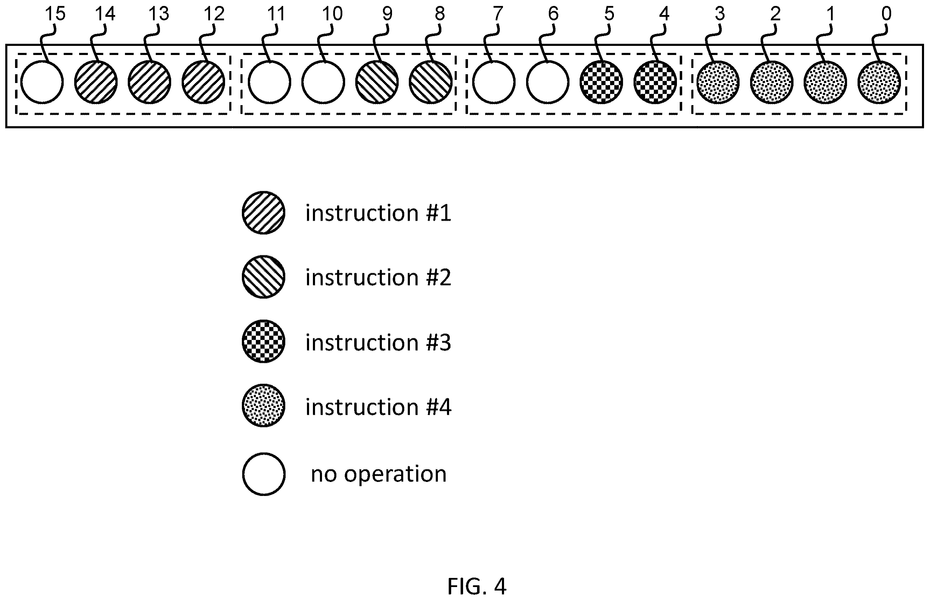

FIG. 4 illustrates assignment of instructions to PEs at a given time slot according to an example use case #2. In this example:

- instruction #1 is assigned to PEs #12-#14;
- instruction #2 is assigned to PEs #8-#9;
- instruction #3 is assigned to PEs #4-#5;
- instruction #4 is assigned to PEs #0-#3;
- no operation, instruction or "nop" instruction is assigned to PEs #6, #7, #10, #11, #15.

Use cases #1 and #2 are use cases that may be performed by a MIMD architecture of four instructions, each with four data streams, as indicated by the dashed line rectangles.

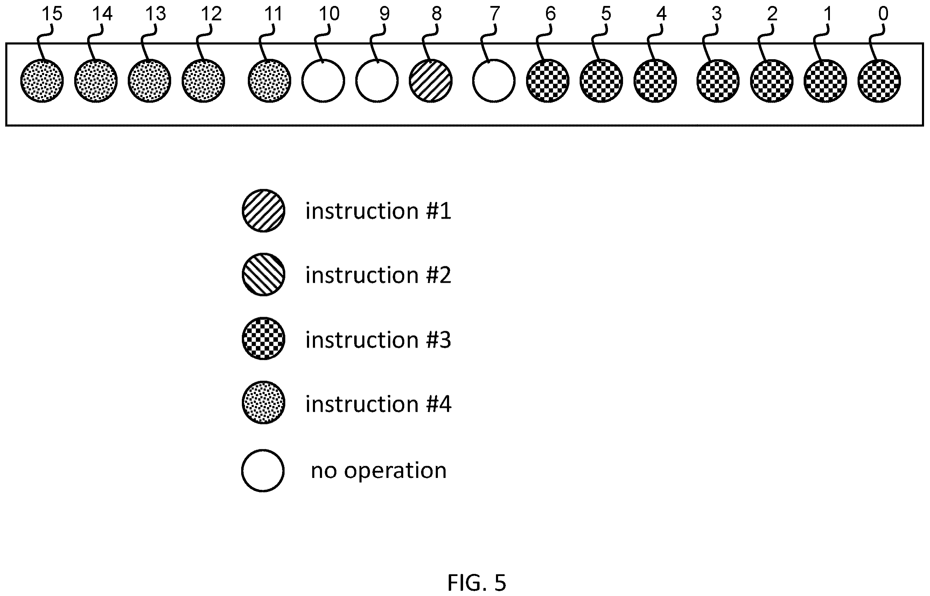

FIG. 5 illustrates assignment of instructions to PEs at a given time slot according to an example use case #3. In this example:

- instruction #1 is assigned to PE #8;
- instruction #2 is not assigned to any of these PEs;
- instruction #3 is assigned to PEs #0 to #6;
- instruction #4 is assigned to PEs #11 to #15;
- no operation, instruction or "nop" instruction is assigned to the other PEs #9, #10, #7.

The program for use case #3 contains a first operation performed by 7 PEs #0 to #6, e.g. a matrix operation, a second operation performed by 5 PEs #11 to #15, e.g. another matrix operation, and a third operation, e.g. a scalar operation performed by a single PE #8. All these operations can in this case be mapped on parallel instruction slots by the compiler. Other mappings of operations to PEs are possible. In this use case, 3 PEs #9, #10, #7 are not used/needed by the program and idle, representing dark silicon when this use case is applied.

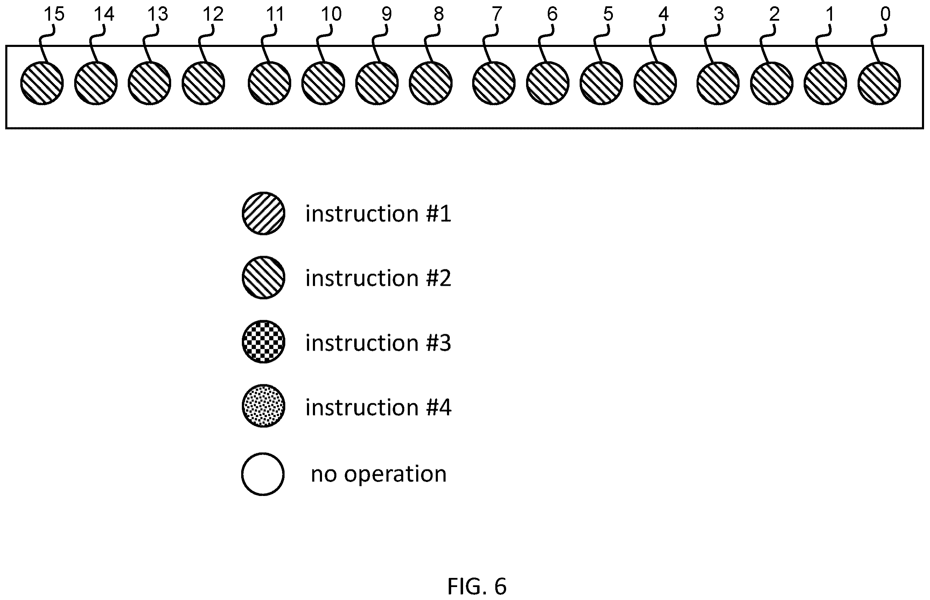

FIG. 6 illustrates assignment of instructions to PEs at a given time slot according to an example use case #4. In this example:

- instruction #2, is assigned to all PEs #0 to #15;
- instructions #1, #3 or #4 are not assigned to any of the PEs.

In use case #4, the maximum number of PEs #0 to #15 is allocated to a single instruction. The instruction to be performed by the PEs is here the instruction #2 from the instruction slot #2. The other instruction slots may be inactive, as there are no available PEs to execute them at a given clock cycle. In this use case, there is no dark silicon.

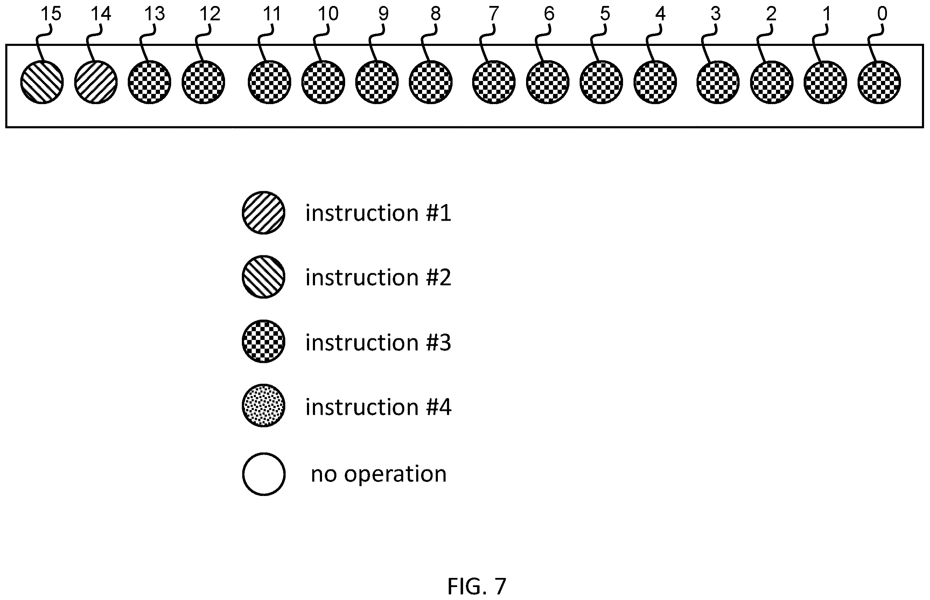

FIG. 7 illustrates assignment of instructions to PEs at a given time slot according to an example use case #5. In this example:

- instruction #1 is assigned to PE #14;
- instruction #2 is assigned to PE #15;
- instruction #3 is assigned to PEs #0-#13;
- instruction #4 is not assigned to any of these PEs;

The use case #5 shows an example with 2 scalar operations and 1 vector operation. For a first scalar operation, the PE #15 is mapped to an instruction slot #2 providing instruction #2. For the other scalar operation, the PE #14 is mapped to an instruction slot #1 providing instruction #1. For the vector operation the PEs #0 to #13 are mapped to an instruction slot #3 providing instruction #3. In this use case, there is no dark silicon.

Use cases #3, #4 and #5 cannot be performed on a single processor using MIMD, SIMD, SISD or MISD architectures due to "walls" that are kept between the PEs or between groups of PEs in their rigid assignment to instruction slots.

As illustrated by FIGS. 3-7, the proposed architecture allows a decoupling between the PEs and instruction slots. This decoupling allows a flexible allocation of any PEs and any number of aggregated PEs, which are then allocated to any of the available instruction slots by the compiler that generates the instructions.

These use cases illustrate the capacity of the proposed architecture to efficiently allocate PEs from the pool of PEs to any of the instruction slots / instructions.

Given the same number of PEs per processor architecture, compared for example to existing processors (e.g., MIMD processors), the proposed VALUTA architecture is able to handle a much wider variety of use cases in more efficient way by reusing PEs and reducing dark silicon. The designer has the freedom of how to apply this advantage, e.g. by opting for higher performance/throughput for a given problem at the same silicon and power cost, or by opting for the same performance/throughput for a given problem at a lower silicon and power cost.

The total data path width, i.e. the number of data streams, that can be processed by the enabled PEs per instruction slot, of a processor implementing the proposed VALUTA architecture, could be wider, while allowing that the PEs that are not used by some instructions are used by other instructions, thus decreasing dark silicon and increasing usage of the over dimensioned data path. This increase in performance reduces the relative cost of the other processor parts like the decoder, controller, program memory and data memory, as these items do not have to scale with the increased performance.

This allocation of PEs from the pool of PEs to the instruction slots / instructions may be controlled by the programmer in the way the programmer writes and dimensions the program variables, in combination with an efficient mapping by the compiler that orders/schedules the instructions to be performed by the pool of PEs.

At programming level, the mode of operation may be performed as follows. When the programmer implements a certain use case, the needed variables are declared with their appropriate types, which are allocated to the available PEs. The programmer continues to write the C/C++ program implementing the use case.

The compiler is configured to allocate the instructions to respective processing elements and instruction slots of the processor, wherein each instruction identifies one or more target processing elements to be used for executing the considered instruction, wherein the compiler is adapted to allocate any of the instructions to any of the processing elements at each time slot. The compiler may allocate any of the instructions to any number of processing elements at each time slot.

The compiler allocates the available PEs to the instruction slots in the most efficient way to create the maximal throughput with utilizing the maximum of PEs at each time slot and leaving the least dark silicon.

The compiler also ensures that no PE is allocated to two or more instructions for a same time slot by checking possible conflicts with other operations to be executed by the same processing element during the same time sloyt.

In particular, for controlling mapping of the instructions to the atomic PEs in a VALUTA architecture, a 'programmer view' and a 'hardware view' may be used.

The programmer view enables the programmer to use, for the atomic PE related operations, any type available (i.e. any size of vector / scalar enabled by the atomic PE). The compiler is configured to map the statements of a program code onto appropriate instructions available in any of the instruction slots, as described by the processor model. This mapping is performed by the compiler based on the programmer view.

The selected instructions may also have a hardware view attached to it, which stitches together the atomic PEs that are required by the types of the variables used in the statements of the program, and which correspond to the programmer view of the mapped instructions. This hardware view ensures that the atomic PEs remain unique and are reused wherever needed by the program, without causing any duplication of the atomic PEs. To enable this uniqueness of the atomic PEs (and avoid HW duplication), all atomic PEs can be used in all instruction slots that provide VALUTA related instructions.

To simplify the stitching (at software or hardware level) of the atomic PEs into a certain type of vector PE, every atomic PE may have a fixed left and right neighbour element.

Depending on the types used in the program the inter-atomic PE hardware stitches/connections may be open or closed, e.g., by a stitch control circuitry.

Stitching refers here to combining (at software or hardware level) input data elements and/or partial results from different data streams, as opposed to element-wise operations on vectors. Stitching can be done before or after generation of the output data by the PEs (for example, for a dot product, stitching has to be done after the element-wise multiplication).

These programmable hardware stitches/connections enable the use of different data types and different operations, linked/associated to different vector widths. For other use cases, different "stitching" functions can be offered at design time and the hardware stitches be opened and closed at compile time.

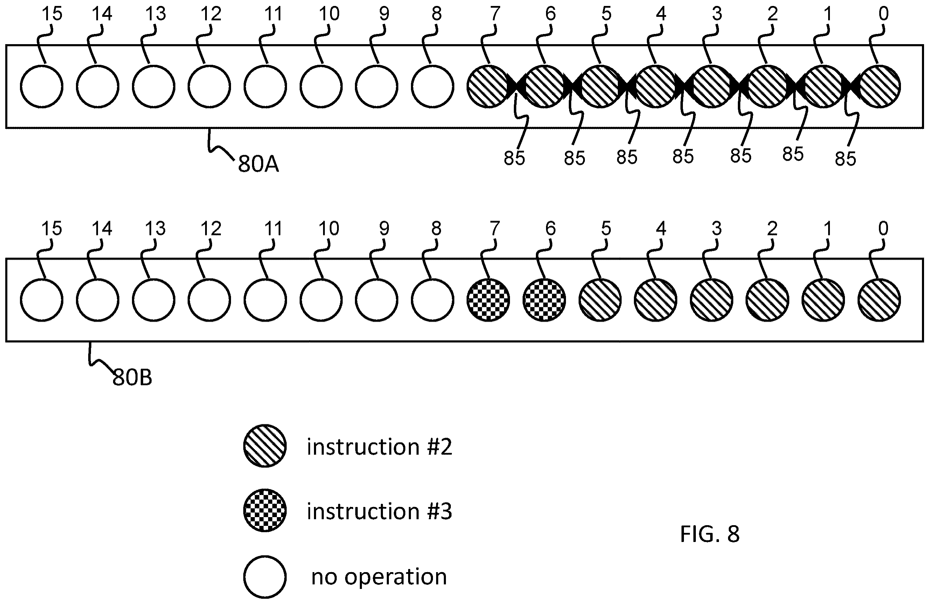

FIG. 8 illustrates assignment of instructions to aggregated atomic PEs at a given time slot according to an example use case #6 adapted for executing programs A and B respectively.

As an example, suppose the program A comprises a vector multiplication X·Y (also referred to as the dot product) with a vector width of 8 scalars Program B comprises 2 vector operations: a Hadamard product X1 * Y1 using vector widths of 6 scalars, and a sum X2 + Y2 of elements in vectors of 2 scalars. For the purpose of this example, all scalars of programs A and B are integers but in general can be of any type.

In pseudo code program A and program B would look like:

Program A:

V8int X; V8int Y; int Z;

$$Z = X \cdot Y ;$$

Program B:

V6int X1; V6int Y1; V6int Z1;
V2int X2; V2int Y2; V2int Z2;

$$Z1 = X1 * Y1;$$

$$Z2 = X2 + Y2;$$

In the declarations of the variables X, Y and Z in program A, and X1, X2, Y1, Y2, Z1 and Z2 in program B, "VNint" designates a vector of N integers (for example, V8int is the type of a vector of 8 integers).

The allocation of operations to PEs are shown in FIG. 8, the PEs are numbered #0 to #15 from right to left. The PEs used for program A are collectively designated by reference 80A and the PEs used for program B are collectively designated by reference 80B.

The programmed operation in program A is a dot product corresponding to an element-wise multiplication of the elements of vectors X and Y followed by a sum of the products.

For example, the dot product of two V8int vectors X=[x1,x2,···,x8] and Y=[y1,y2,···,y8] may be defined as

$X \cdot Y = \sum_{i=1}^{i=8} xi * yi$ and the dot product is a scalar.

In the example of FIG. 8, this dot product may be performed by stitched atomic PEs 0 to 7 mapped with instruction #2 from a corresponding instruction slot. See the hardware stitches 85 represented schematically in FIG. 8.

In program B a vector element-wise multiplication (Hadamard product, Z1 = X1 * Y1) followed by vector element-wise summation (Z2 = X2 + Y2) is performed. In the example of FIG. 8, this Hadamard product is performed by atomic PEs 0 to 5, mapped with instruction #2, whose outputs are aggregated to generate an output vector of 6 elements and the summation is performed by atomic PEs 6 to 7, mapped with instruction #3, whose outputs are aggregated to generate an output vector of 2 elements. Here no hardware stitches are needed.

In pseudo programmer view code, program A and program B would look like:

Program A:

Q8[0] = dot8int(VL8[0],V8R[0]);

Program B:

Q6[0] = mul6int(VL6[0],VR6[0]);

Q2[3] = add2int(VL2[3],VR2[3]);

The declarations are omitted in this view as these become clear when looking at the used registers. A Hadamard vector multiplication of N integers is compiled into "mulNint", while a dot vector product of N integers is compiled into "dotNint".

For program A: The compiler selects the first available 8-elements vector PE (e.g., 8 integers vector) formed by aggregating PEs #0 to #7. Each PE has a right input data VR, a left input data VL and an output data Q. The associated registers are designated by VL8[0], VR8[0], Q8[0], where e.g. VL8[i] means the left input data of the 8-elements PE starting at index i. The multiplication is compiled into the intrinsic dot8int, which is an element-wise vector multiplication of 8 integer elements, followed by the sum of these products. The result is written into the Q output vector, of which only element 0 contains the final scalar value, resulting of the dot product. The other elements of vector Q contain no useful data and could be put to 0.

For program B: The compiler selects the first available 6-elements vector PE (e.g., 6 integers vector) formed by aggregating PEs #0 to #5, with associated registers VL6[0], VR6[0] and Q6[0]. The compiler also selects the first available 2-elements vector PE (e.g., 2 integers vector) by aggregating PEs #6 to #7 with the associated registers VL2[3], VR2[3] and Q2[3]. Note that VL2[0], to VL2[2], VR1[0] to VR2[2], etc., are already all taken by the 6-elements vectors VL6[0] and VR6[0]. The multiplication is compiled into the mul6int intrinsic, and the summation is compiled into the add2int intrinsic.

In pseudo hardware view, program A and program B would look like:

Program A:

(Q1[7],Q1[6],Q1[5],Q1[4],Q1[3],Q1[2],Q1[1],Q1[0]) =

dotstitch8(

mul1int(VL1[7],VR1[7]),         mul1int(VL1[6],VR1[6]),         mul1int(VL1[5],VR1[5]),

mul1int(VL1[4],VR1[4]),         mul1int(VL1[3],VR1[3]),         mul1int(VL1[2],VR1[2]),

mul1int(VL1[1],VR1[1]),         mul1int(VL1[0],VR1[0])

);

Program B:

(Q1[5],Q1[4],Q1[3],Q1[2],Q1[1],Q1[0]) =

hadstitch6(

mul1int(VL1[5],VR1[5]),         mul1int(VL1[4],VR1[4]),         mul1int(VL1[3],VR1[3]),

mul1int(VL1[2],VR1[2]),         mul1int (VL1[1],VR1[1]),         mul1int(VL1[0],VR1[0])

);

(Q1[7],Q1[6]) =

hadstitch2(

add1int (VL1[7],VR1[7]),         add1int(VL1[6],VR1[6])

);

For program A: in the hardware view, the allocated 8-elements vector PE may be split into its atomic PEs, for example 8 PEs #0 to #7. The dot8int function may also be split into atomic operations (here, 8 element-wise operations) such that 8 products are obtained. The products of the atomic operations are summed up together by a stitching function dotstitch8, that may be performed at hardware level (e.g., by additional wiring). For a dot product, the stitching function dotstitch8 sums up all element-wise products resulting from the element-wise multiplication operations. The computation of the sum may be executed in the same time slot as the computation of the products.

For program B, where a Hadamard product and Hadamard addition is used, all element-wise operations are independent from each other, so the stitching functions hadstitch6 and hadstitch2 may be performed at a software level only on the input and output data elements of the PEs and is just an aggregation of the individual output data elements resulting from the element-wise operations so as to generate an output vector Z1 or Z2.

For program B: the 6-elements vector PE may use 6 aggregated atomic PEs, for example PEs #0 to #5, and the 2-elements vector PE may use 2 available aggregated atomic PEs, for example PEs #6 to #7.

Note that in these programs, all operations may use the same pool of atomic PEs for their operations. A single pool of atomic PEs may be mapped to any instruction slot as needed. When several atomic PEs are mapped to a same instruction slot, stitching at software level is achieved for the data elements of the PEs. This approach leads to more flexibility with less hardware.

The compiler is configured to allocate data elements and instructions to the hardware resources (e.g., to the instruction slots and PEs). The compiler keeps track of the availability and dependencies. For each program, the compiler ensures that only available/free atomic PEs are used for each vector variable, without any overlap. For the lifetime of these variables in the program, the related atomic PEs are linked to their respective vectors and cannot be used by other operations on other vectors. The compiler knows this by the way the vectors are constructed from the atomic PEs.

In the hardware view, individual atomic registers may be defined, and the vector PEs of all widths may be specified as 'aliases' of an aggregation of the atomic PEs (e.g., int PEs). For instance, in pseudo hardware description:

- "define PE[16] type int" would specify an array of 16 integer atomic PEs, here PEs for processing integer data elements; and
- "define PE[2] type int8" would specify an array of 2 x 8-elements vector PE, using 16 integer atomic PEs, where the first vector PE may use PEs #0-#7, the second vector PE may use PEs #8-#15.

This way the compiler is configured to know which atomic PEs are linked to which respective variables, and which PEs are still free/unallocated. The compiler is configured to protect and secure its variables from being overwritten unintentionally in the program.

These examples show that various aggregation / stitching schemes may be used for processing input data in parallel in accordance with parallel instructions available at a given time slot at the instruction slots.

A memory suitable for storing program instructions readable by a processor may be for example: Random Access Memory (RAM), read only memory (ROM), a permanent mass storage device such as a disk drive, a hard disk drive (HDD), a solid state drive (SSD), a memory card, a core memory, a flash memory, etc or any combination thereof. A SRAM (Static Random Access Memory) may be used: SRAM based memory is fast and flexible and can be loaded at startup with a program residing in non-volatile memory.

The term "circuitry" may refer to one or more or all of the following:

(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together; and
(c) hardware circuit(s) and or processor(s), such as a microprocessor(s) or a portion of a microprocessor(s), that requires software (e.g., firmware) for operation, but the software may not be present when it is not needed for operation."

As a further example, the term circuitry also covers an implementation of merely a hardware circuit or processor (or multiple processors) or portion of a hardware circuit or processor and its (or their) accompanying software and/or firmware.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Although aspects have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

LIST OF MAIN ABBREVIATIONS

ASIP        Application Specific Instruction set Processor
CPU         Central Processing Unit

| | |
|---|---|
| DU | Distributed Unit |
| FFT | Fast Fourier Transform |
| FIR | Finite Impulse Response |
| GPU | Graphics Processing Unit |
| HW | HardWare |
| L1 | Layer 1 |
| MIMD | Multiple Instruction Multiple Data |
| MISD | Multiple Instruction Single Data |
| NOP | No Operation |
| PE | Processing Element |
| SIMD | Single Instruction Multiple Data |
| SISD | Single Instruction Single Data |
| SW | SoftWare |
| VALUTA | Vector Arithmetic Logic Unit Transaction Atomic |
| VLIW | Very Long Instruction Word |

**Claims**

1. A processor comprising

   a program memory for storing instructions;
   a decoder adapted to convert the instructions into respective operation codes and enable signals;
   a controller including an instruction word consisting of a plurality of instruction slots for providing the instructions to the decoder;
   a plurality of processing elements, each processing element being configured to operate during a time slot in accordance with an operation code provided to an input of the considered processing element so as to apply a mathematical operation to an input data element and generate an output data element, wherein an instruction provided via an instruction slot identifies one or more target processing elements to be used for executing the considered instruction, wherein the enable signals are adapted to control assignment of the operation codes to the processing elements;
   interconnection circuitry adapted to provide any of the operation codes to any of the processing elements at each time slot and configured to be operated in accordance with the enable signals.

2. The processor of claim 1,
   wherein the interconnection circuitry is adapted to provide a given operation code to any number of processing elements at each time slot.

3. The processor of claim 1 or 2, comprising a stitch control circuitry and at least one hardware stitch, wherein each of the at least one hardware stitch is configured to connect or respectively disconnect at least two processing elements, wherein the stitch control circuitry is adapted for opening or closing the at least one stitch in accordance with the stitching signals generated from instructions allocated to the at least two processing elements.

4. The processor of any of the preceding claims,
   wherein the interconnection circuitry comprises a multiplexer configured to provide operation codes to the processing elements in accordance with the enable signals.

5. The processor of any of the preceding claims,
   wherein the plurality of processing elements includes one or more scalar processing elements.

6. The processor of any of the preceding claims,
   wherein the plurality of processing elements includes one or more vector processing elements.

7. The processor of claim 6,
   wherein the vector processing elements have different lengths.

8. The processor of any of the preceding claims,
   wherein at least one first of the processing elements supports at least one first type of mathematical operation and at least one second of the processing elements supports at least one second type of mathematical operation, where the first type of mathematical operation is distinct from the second type of mathematical operation.

9. The processor of any of the preceding claims,
wherein at least one third of the processing elements supports at least one first data type and at least one fourth of the processing elements supports at least one second data type, where the first data type is distinct from the second data type.

10. The processor of any of the preceding claims, wherein the processor operates in accordance with a Very Long Instruction Word operation mode.

11. The processor of any of the preceding claims, wherein the instruction word is a Very Long Instruction Word.

12. A compiler configured to compile a program code to generate instructions to be processed by a processor according to any of the preceding claims, wherein the compiler is configured to allocate the instructions to respective processing elements and instruction slots of the processor, wherein each instruction identifies one or more target processing elements to be used for executing the considered instruction, wherein the compiler is adapted to allocate any of the instructions to any of the processing elements at each time slot.

13. A compiler according to claim 12, wherein the compiler is adapted to allocate any of the instructions to any number of processing elements at each time slot.

14. A compiler according to claim 12 or 13, wherein the compiler is configured to ensure that no processing element is allocated to two or more instructions in the same time slot by checking possible conflicts with other instructions to be allocated in the same time slot to the same processing element.

FIG. 1

FIG. 2

EP 4 718 244 A1

| 15 | 14 | 13 | 12 | 11 | 10 | 9 | 8 | 7 | 6 | 5 | 4 | 3 | 2 | 1 | 0 |

◉ instruction #1

◉ instruction #2

◉ instruction #3

◉ instruction #4

FIG. 3

FIG. 4

EP 4 718 244 A1

FIG. 5

FIG. 6

instruction #1

instruction #2

instruction #3

instruction #4

no operation

| 15 | 14 | 13 | 12 | 11 | 10 | 9 | 8 | 7 | 6 | 5 | 4 | 3 | 2 | 1 | 0 |

instruction #1

instruction #2

instruction #3

instruction #4

no operation

FIG. 7

instruction #2

instruction #3

no operation

FIG. 8

Europäisches
Patentamt

European
Patent Office

Office européen
des brevets

# EUROPEAN SEARCH REPORT

**Application Number**

EP 25 20 3559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/226468 A1 (GRABNER KARL-HEINZ [AT] ET AL) 27 September 2007 (2007-09-27) * the whole document * ----- | 1-14 | INV. G06F9/38 |
| X | US 2009/282223 A1 (LYUH CHUN-GI [KR] ET AL) 12 November 2009 (2009-11-12) * the whole document * ----- | 1-14 | |
| X | US 6 839 828 B2 (IBM [US]) 4 January 2005 (2005-01-04) * the whole document * ----- | 1-14 | |

**TECHNICAL FIELDS SEARCHED (IPC)**

G06F

The present search report has been drawn up for all claims

| Place of search | Date of completion of the search | Examiner |
|---|---|---|
| The Hague | 12 February 2026 | Moraiti, Marina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 3559

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| US 2007226468 | A1 | 27-09-2007 | AT | 501213 A2 | 15-07-2006 |
| | | | US | 2007226468 A1 | 27-09-2007 |
| | | | WO | 2006058358 A2 | 08-06-2006 |
| US 2009282223 | A1 | 12-11-2009 | KR | 20090116511 A | 11-11-2009 |
| | | | US | 2009282223 A1 | 12-11-2009 |
| US 6839828 | B2 | 04-01-2005 | NONE | | |

EPO FORM P0459

For more details about this annex : see Official Journal of the European Patent Office, No. 12/82